# FASCICULE DE BREVET EUROPEEN

(11) **EP 4 268 030 B1**
(45) Date de publication et mention de la délivrance du brevet: **04.12.2024**
(21) Numéro de dépôt: 21845061.7
(22) Date de dépôt: 27.12.2021
(51) Int. Cl.: G05B 19/045, B25J 9/16, G06F 9/46

(54) **SYSTÈME ET PROCÉDÉ DE COMMANDE DE MODES DE FONCTIONNEMENT D'UN SYSTÈME**
SYSTEM UND VERFAHREN ZUR STEUERUNG VON BETRIEBSMODI EINES SYSTEMS
SYSTEM AND METHOD FOR CONTROLLING OPERATING MODES OF A SYSTEM

(30) Priorité: 28.12.2020 FR 2014185
(43) Date de publication de la demande: 01.11.2023
(73) Titulaire: Commissariat à l'Energie Atomique et aux Energies Alternatives, 75015 Paris (FR)
(72) Inventeur: GRADOUSSOFF, Baptiste, 91190 GIF SUR YVETTE (FR)
(74) Mandataire: Lavoix
(86) Numéro de dépôt international: PCT/EP2021/087682
(87) Numéro de publication internationale: WO 2022/144337

(56) Documents cités:
- EP-A1- 1 398 698
- EP-A2- 1 532 496
- EP-B1- 1 532 496
- US-A1- 2003 005 175
- US-B1- 6 327 508

## Description

La présente invention concerne un système et un procédé de commande de modes de fonctionnement d'un système.

L'invention se situe dans le domaine du pilotage des systèmes physiques ayant plusieurs modes de fonctionnement, par exemple les systèmes robotiques.

Dans le domaine des systèmes robotiques, il est connu de fournir des applications logicielles permettant d'implémenter différentes lois de commande d'un ou plusieurs robots. En général, plusieurs modes de fonctionnement des robots sont disponibles, et un utilisateur a la possibilité de piloter les robots selon ces modes de fonctionnement, via l'application logicielle fournie. Dans de nombreux scénarios d'utilisation, le pilotage des robots doit s'effectuer en temps réel, et donc toute application logicielle de contrôle et commande d'un système robotique doit permettre une gestion des passages d'un mode de fonctionnement à un autre en temps réel.

Il est connu de représenter et de coder les modes de fonctionnement via un schéma d'enchaînements d'exécution de composants logiciels, connectés via des bascules conditionnelles permettant de réaliser l'implémentation de plusieurs modes de fonctionnement. Cependant, les applications logicielles ainsi obtenues sont complexes, à cause des interdépendances entre les composants logiciels, et sont par conséquent difficiles à coder et à maintenir en cas d'ajout de nouveaux modes de fonctionnement par exemple. De plus, plus le nombre de modes de fonctionnement augmente, plus le basculement d'un mode de fonctionnement à un autre risque de générer des effets de bords, i.e. des comportements imprévus, à cause notamment de la complexité du schéma d'exécution et du nombre important de bascules à réaliser.

Dans le domaine du pilotage de systèmes robotiques, ont été développés divers intergiciels (en anglais « middleware »), dédiés à faciliter le développement d'applications logicielles de contrôle/commande de systèmes robotiques. Un intergiciel définit un système de structuration et d'échange d'informations entre composants logiciels permettant de réaliser des applications de commande dites « métier ». Dans le domaine des systèmes robotiques, on peut citer les intergiciels ROS (acronyme de « Robot Operating System »), OROCOS (acronyme de « Open Robot Control Software ») et RT-MAPS^{®}, ce dernier étant plus particulièrement dédié au contrôle de véhicules. La plupart de ces intergiciels sont orientés composants, les composants étant des briques logicielles « métier » exécutables, chaque composant ayant des entrées et des sorties associées. Les composants sont interconnectables, selon des principes propres à chacun de ces intergiciels. Néanmoins, aucun de ces intergiciels ne fournit une possibilité de basculement aisé et en temps réel entre modes de fonctionnement.

Le document EP1398698A1 montre un procédé et système de gestion d'évènements pour systèmes d'automatisme fonctionnant en temps réel.

L'invention a pour objet de remédier aux inconvénients de l'état de la technique, en fournissant un système de commande de modes de fonctionnement d'un système, compatible avec une exécution temps-réel.

A cet effet, l'invention propose, selon un aspect, un système de commande de modes de fonctionnement d'un système d'un système à commander, chaque mode de fonctionnement étant mis en oeuvre par une exécution d'un ou plusieurs composants logiciels. Ce système de commande comporte :
- des composants logiciels dits composants élémentaires, chaque composant élémentaire ayant au moins une entrée adaptée à recevoir des données d'entrée et/ou au moins une sortie adaptée à émettre des données de sortie,
- au moins un méta-composant logiciel comportant :
   un ou plusieurs schémas de câblage internes, chaque schéma de câblage interne définissant des interconnexions entre entrées et sorties de composants élémentaires et/ou de méta-composants,
   une logique de transition entre états définissant un état courant dudit système à commander et un enchainement entre états, au moins certains des états correspondant à une mise en oeuvre d'un schéma de câblage interne, et un mécanisme de pilotage des configurations internes,
   une interface de programmation fournissant des services/fonctions mettant en oeuvre au moins un schéma de câblage interne,
- une interface de programmation principale, fournissant des services/fonctions accessibles via une interface utilisateur pour commander ledit système selon une pluralité de modes de fonctionnement, ladite interface de programmation principale étant connectée aux interfaces de programmation de chaque composant logiciel, ladite interface de programmation principale étant configurée pour exécuter des services/fonctions via le mécanisme de pilotage des configurations internes de chaque composant logiciel.

Avantageusement, l'invention permet une commande de modes de fonctionnement d'un système, qui utilise une imbrication hiérarchique et récursive de composants logiciels.

Le système de commande de modes de fonctionnement d'un système selon l'invention peut également présenter une ou plusieurs des caractéristiques ci-dessous, prises indépendamment ou selon toutes les combinaisons techniquement envisageables.

Ce système de commande de modes de fonctionnement comporte en outre un module de séquencement de transitions permettant de réaliser un basculement d'un mode de fonctionnement à un autre en temps réel.

Le module de séquencement met en oeuvre, suite à une commande de basculement d'un mode de fonctionnement courant à un nouveau mode de fonctionnement, une mémorisation des transitions à effectuer séquentiellement pour passer audit mode de fonctionnement nouveau, et une commande d'exécution de reconfigurations des schémas de câblage internes des composants logiciels en cascade, avant l'écoulement d'une durée de cycle temporel prédéterminée.

La mémorisation des transitions à effectuer est une mémorisation dans une structure de mémorisation de type premier arrivé, premier sorti, et la commande d'exécution des reconfigurations met en oeuvre un dépilement des transitions mémorisées dans ladite structure de mémorisation.

La logique de transition entre états est mise en oeuvre sous forme d'automate à états finis.

La logique de transition entre états est mise en oeuvre sous forme d'automate ayant un nombre fini d'états hiérarchisés.

Ce système de commande est adapté pour commander les modes de fonctionnement d'un système robotique.

Selon un autre aspect, l'invention concerne un procédé de commande de modes de fonctionnement d'un système à commander, mis en oeuvre par un système de commande de modes de fonctionnement tel que brièvement décrit ci-dessus. Ce procédé comporte des étapes de:
- réception d'une requête de commande dudit système à commander, selon un mode de fonctionnement,
- appel d'une fonction ou d'un service mis oeuvre par un méta-composant fournisseur, pour effectuer ladite requête de commande ;
- requête d'exécution de transition(s) entre un état courant et un état à atteindre pour exécuter ladite fonction ou ledit service, par mise en oeuvre de la logique de transitions dudit méta-composant fournisseur et des composants imbriqués dans le méta-composant fournisseur,
- commande de reconfiguration de schémas de câblage internes en fonction desdites transitions.

Le procédé de commande de modes de fonctionnement d'un système selon l'invention peut également présenter une ou plusieurs des caractéristiques ci-dessous, prises indépendamment ou selon toutes les combinaisons techniquement envisageables.

Le procédé de commande comporte en outre une mémorisation des transitions à effectuer séquentiellement pour passer d'un mode fonctionnement courant au mode de fonctionnement nouveau requis par ladite requête de commande du système, et une commande d'exécution des reconfigurations des composants logiciels en cascade, avant l'écoulement d'une durée de cycle temporel prédéterminée.

La mémorisation des transitions à effectuer est une mémorisation dans une structure de mémorisation de type premier arrivé, premier sorti, et la commande d'exécution des reconfigurations met en oeuvre un dépilement des transitions mémorisées dans ladite structure de mémorisation.

Selon un autre aspect, l'invention concerne un programme d'ordinateur composant des instructions logicielles qui, lorsqu'elles sont exécutées par un dispositif électronique programmable mettent en oeuvre un procédé de commande d'un système selon plusieurs modes de fonctionnement tel que brièvement décrit ci-dessus ;

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un système robotique dans lequel l'invention trouve une application ;
[Fig 2] la figure 2 représente schématiquement un méta-composant et un schéma de câblage associé selon un mode de réalisation ;
[Fig 3] la figure 3 illustre schématiquement un composant élémentaire ;
[Fig 4] la figure 4 est synoptique des blocs fonctionnels d'un système robotique dans un exemple d'application;
[Fig 5] la figure 5 illustre schématiquement un exemple de logique de transition entre états et schémas de câblage associés ;
[Fig 6] la figure 6 représente schématiquement une logique de transition hiérarchique ;
[Fig 7] la figure 7 est un organigramme des principales étapes d'un procédé de commande des modes de fonctionnement d'un système robotique selon un mode de réalisation ;
[Fig 8] la figure 8 illustre la logique de séquencement et de synchronisation d'un procédé tel que décrit ci-dessus en référence à la figure 7.

L'invention sera décrite ci-après plus particulièrement dans son application dans un système robotique, pour la commande de différents modes de fonctionnement d'équipements robotiques.

L'invention ne se limite cependant pas à ce type d'application, et trouve des applications plus généralement dans tout système physique ou informatique, appliquant des lois de commande pour piloter divers modes de fonctionnement d'équipements physiques, par exemple des ordinateurs, des objets connectés, des équipements de domotique.

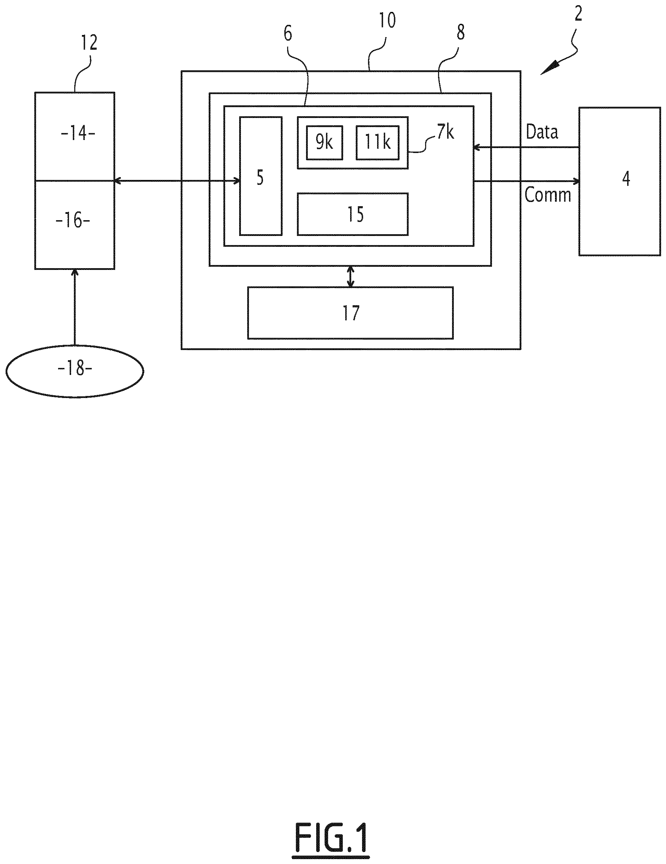

La figure 1 illustre schématiquement un système robotique 2 de commande d'un ou plusieurs équipements robotiques 4.

Par exemple, l'équipement robotique 4 est un bras manipulateur, contrôlable par l'intermédiaire d'ordres de commande envoyés par un logiciel de commande 6, ou en d'autres termes un programme d'ordinateur de commande 6. Ce logiciel de commande 6 est par exemple mis en oeuvre par un processeur de calcul 8 d'un dispositif de calcul programmable 10, par exemple un ordinateur. Le dispositif de calcul programmable 10 comporte en outre une unité de mémoire électronique 17, adaptée à stocker des données, et connectée au processeur de calcul 8 via un bus de communication.

Le logiciel de commande 6 est configuré pour envoyer des ordres de commande Comm à l'équipement robotique 4, et pour recevoir des données Data en provenance de l'équipement commandé, par exemple des données relatives à l'état de l'équipement robotique 4.

Il est entendu que l'exemple présenté ici est simplifié pour les besoins de l'explication.

De plus, le système robotique 2 comporte une interface utilisateur 12, qui est adaptée pour communiquer avec le processeur de calcul 8 via un bus de communication de données ou tout autre moyen de communication approprié.

L'interface utilisateur 12 comporte notamment une interface d'affichage 14 et une interface de saisie de commandes d'utilisateur 16. Dans un mode de réalisation, l'interface d'affichage 14 est un écran tactile qui intègre également l'interface de saisie de commandes de l'utilisateur 16.

Ainsi, dans un scénario d'utilisation, un utilisateur 18 a la possibilité de commander l'équipement robotique 4 par utilisation de l'interface de saisie de commandes d'utilisateur 16.

En variante, les commandes de l'équipement robotique sont fournies par un système utilisateur et non par un utilisateur.

Typiquement, plusieurs lois de commande permettant de commander plusieurs modes de fonctionnement d'un équipement robotique 4 sont définies.

Par exemple, dans le cas d'un bras manipulateur, les lois de commande comprennent le pilotage cartésien, articulaire, en position, en vitesse, en effort. Plus généralement, pour un système robotique simple, on distingue généralement 5 à 10 modes de fonctionnement.

Pour un système robotique de commande efficace, un fonctionnement en temps réel est souhaitable. Le logiciel de commande 6 doit gérer efficacement tout basculement d'un mode de fonctionnement à un autre suite à une commande de l'utilisateur.

Afin de réaliser ces objectifs, le logiciel de commande 6 met en oeuvre un procédé de gestion de modes de fonctionnement pour la commande d'un système tel que décrit plus en détail ci-après.

Le logiciel de commande 6 comprend :
- une interface de programmation principale 5, qui fournit des fonctions/services exécutables, qui peuvent être appelés via l'interface utilisateur 12 ;
- des méta-composants et composants logiciels imbriqués 7k, décrits plus en détail ci-après, chaque méta-composant ou composant fournissant une interface de programmation 9k, qui fournit des fonctions/services exécutables par le méta-composant, et un mécanisme 11k de pilotage des configurations internes, qui met en oeuvre, pour chaque méta-composant, une logique de transitions entre états et des schémas de câblage internes, comme décrit plus en détail ci-après ;
- un module 15 de séquencement de transitions permettant de réaliser un basculement d'un mode de fonctionnement à un autre en temps réel.

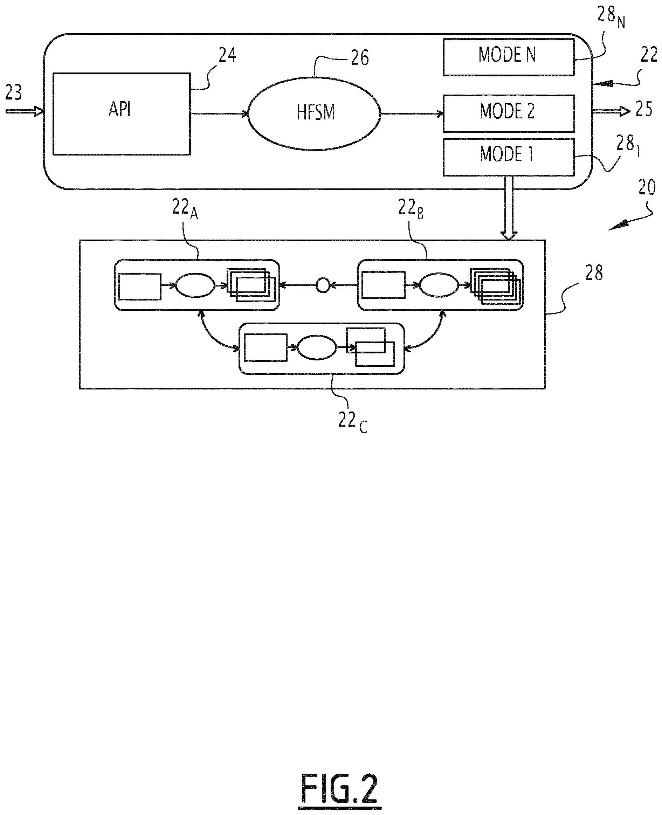

La figure 2 représente schématiquement un méta-composant et un schéma de câblage associé selon un mode de réalisation, mis en oeuvre dans un système de commande 20 de modes de fonctionnement d'un système selon un mode de réalisation.

Ce système 20 est un système orienté composants, construit à base de composants logiciels imbriqués, formant une imbrication hiérarchique, comme décrit plus en détail ci-après.

Dans la suite on appellera composant élémentaire un composant logiciel qui n'encapsule pas un autre composant logiciel, et méta-composant un composant logiciel qui encapsule un ou plusieurs composants qui sont des composants logiciels élémentaires et/ou des méta-composants.

Le terme « composant » désignera par la suite à la fois un composant élémentaire et un méta-composant.

Un méta-composant 22 comprend une interface de programmation API 24, qui permet d'accéder aux fonctions ou services fournies par le méta-composant 22 et gère les entrées 23 et les sorties 25 associées au méta-composant.

L'interface de programmation 24 s'appuie sur une logique de transition 26 entre états du système, certains états étant associés à des schémas de câblage, définissant des modes de fonctionnement interne du méta-composant.

Dans un mode de réalisation, la logique de transition est implémentée par exemple sous forme d'automate, en particulier sous forme d'automate avec un nombre fini d'états hiérarchisés ou HFSM (pour « Hierarchical finite state machine ») 26.

Dans un autre mode de réalisation, dans un cas simple, la logique de transition 26 est implémentée sous forme de variable, dont la valeur correspond à un mode de fonctionnement interne du méta-composant, par exemple une variable n, la valeur de n indiquant un schéma de câblage correspondant à un mode de fonctionnement Mode_n à sélectionner.

Dans un autre mode de réalisation, la logique de transition 26 est implémentée sous forme d'automate à états finis FSM, ou d'arbre de comportement (« behaviour tree »).

Le mécanisme de pilotage des configurations internes du méta-composant utilise la logique de transition 26.

En d'autres termes, chaque méta-composant fournit un mécanisme de pilotage des configurations internes selon des schémas de câblage internes, pour atteindre un état du système.

L'invention sera plus particulièrement décrite ci-après dans un mode de réalisation dans lequel la logique de transition 26 est implémentée sous forme d'automate avec un nombre fini d'états hiérarchisés HFSM.

Le HFSM 26 définit un état courant dudit système à commander et un enchainement hiérarchisé entre états, chaque état correspondant à une mise en oeuvre d'un nombre K de schémas de câblage internes, typiquement K=0 ou K=1, et, dans certains cas de figure, K>1. Les règles d'association entre états et schémas de câblage internes sont spécifiées et mémorisées.

Un méta-composant 22 comprend N schémas de câblage internes 28₁ à 28_{N}, avec N un nombre entier positif, par exemple N=4 dans l'exemple de la figure 2.

La logique de transition 26 définit M états, des conditions de transitions ou enchaînements entre les états, et des signaux déclenchant les transitions.

Dans un mode de réalisation, la logique de transition est publique, c'est-à-dire visible par les objets logiciels utilisateurs du méta-composant.

Les schémas de câblage internes 28₁ à 28₄ sont définis dans le méta-composant 22 et sont de préférence privés, c'est-à-dire non accessibles à un utilisateur.

Chaque schéma de câblage interne 28 définit des interconnexions entre composants et/ou méta-composants, avec des flux de données d'entrée/sortie et des enchaînements d'exécution de fonctions/services fournis par les composants/méta-composants interconnectés.

Un schéma de câblage 28 est illustré schématiquement à la figure 2. Dans cet exemple, le schéma de câblage 28 met en oeuvre trois méta-composants 22_{A}, 22_{B}, 22_{C}, chaque méta-composant ayant un nombre N_{A}, N_{B}, N_{C} de schémas de câblage internes. Les interconnexions entre méta-composants 22A, 22B, 22C sont réalisées en utilisant des relations d'interconnexion prédéfinies et propres à chaque schéma de câblage.

Ainsi, il est clair que le système proposé permet une structuration imbriquée de composants d'un logiciel de commande de système de commande d'équipements physiques, en particulier d'un système robotique.

Un méta-composant 22 ainsi généré comprend des composants ou méta-composants dits « enfants » accessibles via les interfaces de programmation fournies par chacun des composants et méta-composant, ce qui permet une imbrication hiérarchique et récursive.

Un logiciel de commande de système comporte un méta-composant principal, de plus haut niveau de hiérarchie, qui comporte des premiers méta-composants et/ou composants enfants de premier niveau de descendance, les premiers méta-composants de premier niveau de descendance comprenant eux-mêmes des deuxièmes méta-composants et/ou des deuxièmes composants de premier niveau de descendance, qui sont des méta-composants ou composants de deuxième niveau de descendance par rapport au méta-composant principal et ainsi de suite. Dans une telle structure hiérarchique, des relations de type « parent/enfant » lient les composants et méta-composants des différents niveaux.

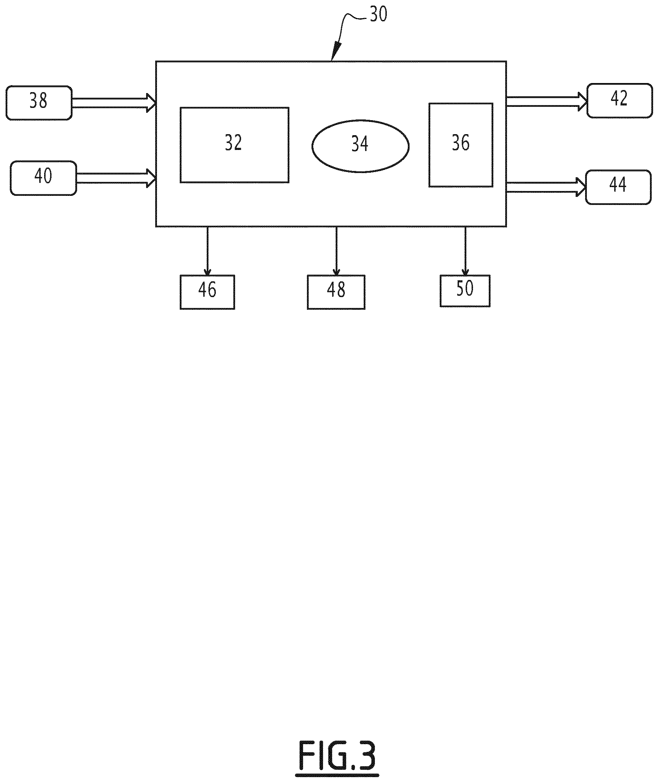

La figure 3 illustre schématiquement un composant élémentaire 30.

Un composant élémentaire est un composant logiciel qui implémente du code logiciel dit code logiciel « métier », contribuant à réaliser une ou plusieurs fonctionnalités en lien avec les lois de commande de l'équipement matériel à piloter. Par exemple, dans le cas d'un bras robotique, le code logiciel métier comprend des fonctions de génération de trajectoire, d'asservissement dans un système de coordonnées cartésien, etc.

Le composant élémentaire 30 comporte un module 36 comprenant le code logiciel « métier », et optionnellement une interface de programmation 32 qui s'appuie sur une logique de transition 34 entre états.

Pour un composant élémentaire, la logique de transition 34 permet de fournir un état courant du composant élémentaire à un ou plusieurs méta-composants parents ou à utilisateur via l'interface de programmation.

De plus, dans le cas où le composant élémentaire implémente par exemple plusieurs variantes d'une fonction, la logique de transition entre états permet de structurer et de reconfigurer la variante d'implémentation, par exemple choix de la variante de calcul, la transmission des paramètres associés.

Le composant élémentaire comporte en outre des entrées comprenant des données d'entrée 38 et des services 40 fournis par un composant (méta ou élémentaire) tiers (parent ou frère). Il comporte de même des sorties comprenant des données de sortie 42 et des services 44 fournis à un composant tiers. Les nombres et la nature des données d'entrée 38, 40 et de sortie 42, 44 sont variables, ce sont des données dites « métier » dépendantes du système de commande d'équipements physiques à contrôler.

Un méta-composant comporte des entrées et des sorties analogues à celles décrites ci-dessus pour un composant élémentaire.

De plus, un composant élémentaire peut optionnellement générer des évènements 46, un évènement étant un message émis. De même, un méta-composant également peut optionnellement générer des évènements.

Un mécanisme d'abonnement à des messages est également fourni, un méta-composant parent ayant la possibilité de s'abonner à un événement émis par un composant enfant, par exemple dans le but d'exécuter une fonction en réaction à cet événement. Ce mécanisme est un mécanisme connu sous le nom de « call-back ».

En complément, un composant (méta ou élémentaire) dispose de variables de type « paramètre » 48 et « mesure » 50, disponibles via son API. Les paramètres 48 sont des variables accessibles en écriture. Les mesures sont des variables en lecture seule.

Dans des cas simples, il est possible d'utiliser un paramètre en remplacement d'une HFSM, dans le but de piloter les configurations internes à un méta-composant. Le changement de valeur du paramètre, via une fonction « callback » dédiée, permet alors de déclencher une reconfiguration de mode de fonctionnement interne.

On comprend de cette description qu'un composant élémentaire diffère d'un méta-composant par le fait qu'un composant élémentaire ne comporte pas d'autre composant imbriqué, mais que leur architecture et leurs entrées/sorties sont analogues. Un composant élémentaire comporte un module d'implémentation de code métier.

Par la suite, le terme composant sera utilisé à la fois pour méta-composant et pour composant élémentaire.

Pour faciliter l'explication, nous considérons l'exemple d'un logiciel de commande d'un bras robotique dédié à la téléopération maître-esclave.

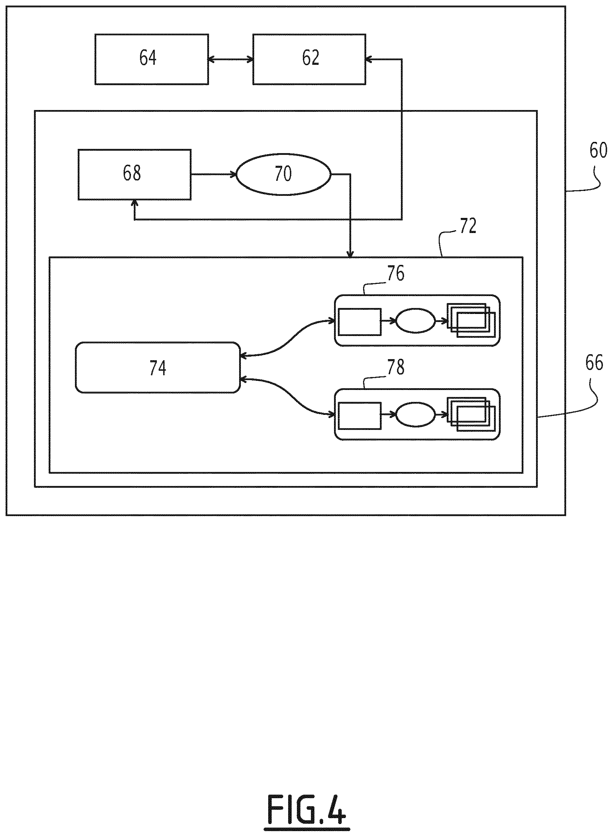

Dans ce cas d'application, comme illustré schématiquement à la figure 4, le logiciel de commande 60 comprend une interface de programmation principale 62, et un module 64 de séquencement de transitions permettant de réaliser un basculement d'un mode de fonctionnement à un autre en temps réel.

Le logiciel de commande 60 comporte en outre un méta-composant 66 de téléopération maître-esclave, comprenant une interface de programmation 68, un module 70 mettant en oeuvre une logique de transition entre états, ce module 70 pilotant la reconfiguration de modes de fonctionnement internes.

Le méta-composant 66 comporte en outre un schéma de câblage interne 72, qui contrôle la téléopération, qui comprend un composant 74 de gestion de couplage maître/esclave, un méta-composant 76 de gestion de fonctionnement dit « bras maître » et un méta-composant 78 de gestion de fonctionnement dit « bras esclave ».

L'interface de programmation principale 62 est connectée à l'interface de programmation 68 du méta-composant 66, ainsi qu'aux interfaces de programmation des méta-composants respectifs 76 et 78.

Les détails des méta-composants 76 et 78 ne sont pas décrits ici, ces méta-composants étant structurellement analogues au méta-composant décrit en référence à la figure 2.

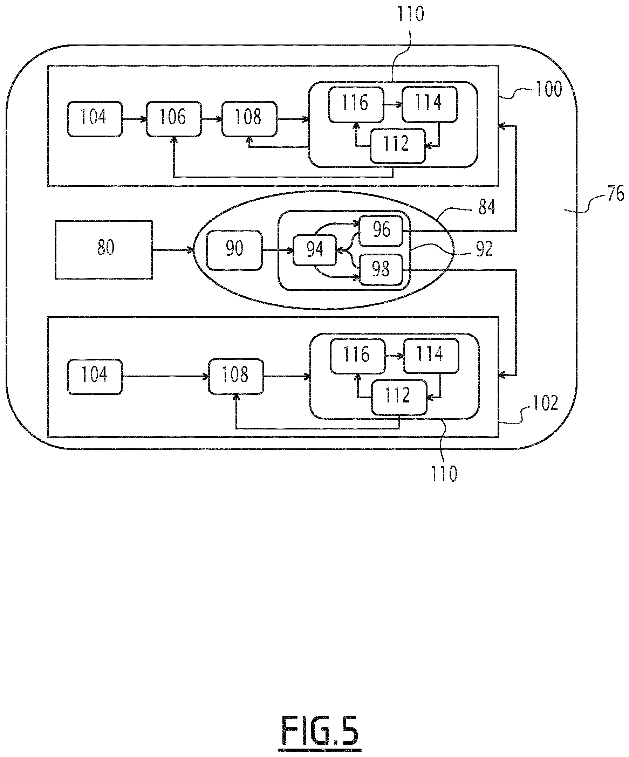

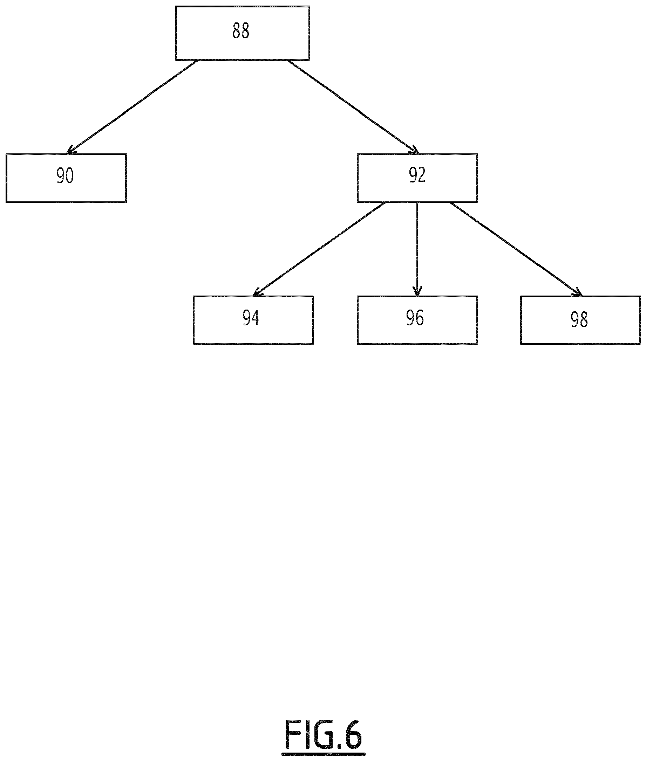

La figure 5 illustre un exemple plus détaillé de mode de réalisation d'un méta-composant de gestion de fonctionnement « bras maître » 76, mettant en oeuvre une logique de transition 84 entre états implémentée sous forme d'automate HFSM. La figure 6 illustre schématiquement la hiérarchie des états dans cet exemple d'application.

Dans ce mode de réalisation, la logique de transition 84 comprend un état racine 88, des états 90 et 92 directement descendants de l'état racine et correspondant respectivement à un état 90 « hors tension » ou « power off » en anglais, et un état 92 « sous tension » ou « power on » en anglais.

L'état « sous tension » 92 comprend 3 états de niveau hiérarchique inférieur, qui sont respectivement :
- Etat 94 : état de repos ;
- Etat 96 : commande de déplacement cartésien ;
- Etat 98 : commande de déplacement articulaire.

Le démarrage du système à commander utilise les transitions d'état suivantes : état racine 88, puis état hors tension 90, puis état sous tension 92, puis état de repos 94.

En mode de fonctionnement nominal, le système est commandé en mode de fonctionnement cartésien (état 96), en mode de fonctionnement articulaire (état 98), ou en repos (état 94).

L'état 96 de commande de déplacement cartésien correspond à un schéma de câblage 100, et l'état 98 de commande de déplacement correspond à un schéma de câblage 102.

Chaque schéma de câblage 100, 102 comporte des composants et méta-composants, qui exécutent des calculs, fournissent des services, transmettent de commandes de déplacement effectif au bras robotique.

Dans cet exemple, les schémas de câblage 100, 102 respectifs font intervenir les composants élémentaires suivants :
- composant 104 de génération de trajectoire, configurable pour générer une trajectoire cartésienne ou articulaire, i.e. qui génère la trajectoire cartésienne que doit suivre l'extrémité du robot dans l'espace, ou la trajectoire articulaire que doit suivre chaque articulation du robot, à partir d'un ou plusieurs points de destination fournis par l'utilisateur ;
- composant 106 de conversion de l'espace cartésien à l'espace articulaire, également appelé module MGI pour modèle géométrique inverse ;
- composant 108 de correction articulaire, permettant de calculer des consignes de couple pour chaque articulation du robot, à partir de la consigne de position articulaire du robot et de sa position réelle.

Les schémas de câblage 100, 102 respectifs font intervenir un méta-composant 110 de contrôle de robot bas niveau, qui gère un ensemble de commandes bas-niveau, par exemple l'interfaçage 114 avec le matériel, la surveillance des consignes, le contrôle-commande des couples moteurs 116... De plus, le méta-composant 110 implémente un modèle géométrique du robot 112, qui permet de convertir les mesures de vitesses et positions moteurs en mesures articulaires et cartésiennes.

Pour la commande en mode articulaire, le schéma de câblage 102 est utilisé, la génération de trajectoire 104 est configurée pour fournir des consignes de positions articulaires, qui sont envoyées au composant 108 qui fournit en sortie un couple articulaire de consigne auprès du méta-composant 110 de contrôle de robot bas-niveau.

Pour la commande en mode cartésien, le schéma de câblage 100 est utilisé, la génération de trajectoire 104 fournit des consignes de position cartésienne, qui sont converties en positions articulaires par le composant 106, puis envoyées au composant 108 qui fournit en sortie un couple articulaire de consigne auprès du méta-composant 110 de contrôle de robot bas-niveau.

Chaque schéma de câblage définit une combinaison de composants et des connexions qui sont propres à la mise en oeuvre du mode de fonctionnement commandé, tout en utilisant des composants élémentaires de manière mutualisée.

De préférence, la transition entre deux modes de fonctionnement différents, par exemple entre le mode de fonctionnement cartésien et mode de fonctionnement articulaire se fait en passant de l'état 96 de commande de déplacement cartésien à l'état de repos 94, puis à l'état 98 de commande de déplacement articulaire.

Une commande de changement de mode de fonctionnement entraîne des changements d'états des composants, et le changement de configuration d'un composant risque d'impacter le fonctionnement d'un autre composant exécuté en aval.

Afin de garantir la cohérence et le respect des flux d'exécution des composants imbriqués, un procédé de commande de modes de fonctionnement tel que décrit ci-après est mis en oeuvre.

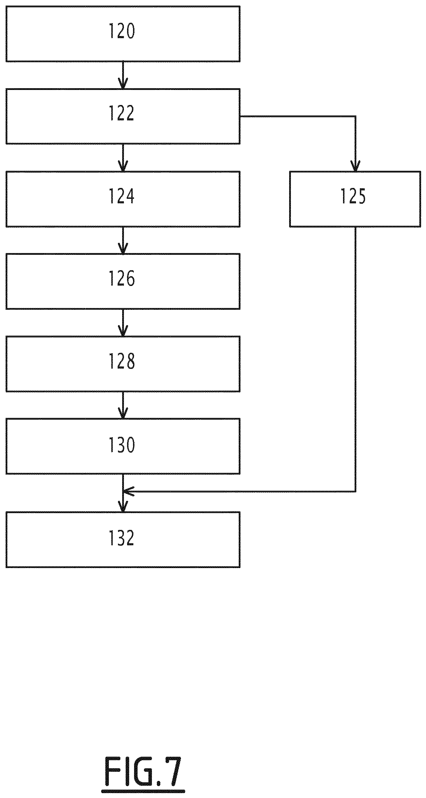

La figure 7 est un organigramme des principales étapes d'un procédé de commande de modes de fonctionnement d'un système dans un mode de réalisation de l'invention. Ce procédé de commande est mis en oeuvre par un programme d'ordinateur, exécuté par un ou plusieurs processeurs d'un dispositif électronique de calcul.

Le procédé comporte une première étape 120 de réception d'une requête de commande du système, en provenance d'une interface utilisateur.

Par exemple, dans le cas du système robotique décrit à titre d'exemple ci-dessus, la requête de commande est une commande de mouvement cartésien dans l'exemple décrit ci-dessus, alors que le système robotique est dans un état de commande en mode articulaire.

Le procédé comporte ensuite une étape 122 d'appel d'une fonction fournie par un méta-composant, appelé ci-après méta-composant fournisseur, pour réaliser la requête de l'utilisateur. L'exécution de la fonction est mise en attente (étape 125) pendant la mise en oeuvre des étapes 124 à 130 décrites ci-après.

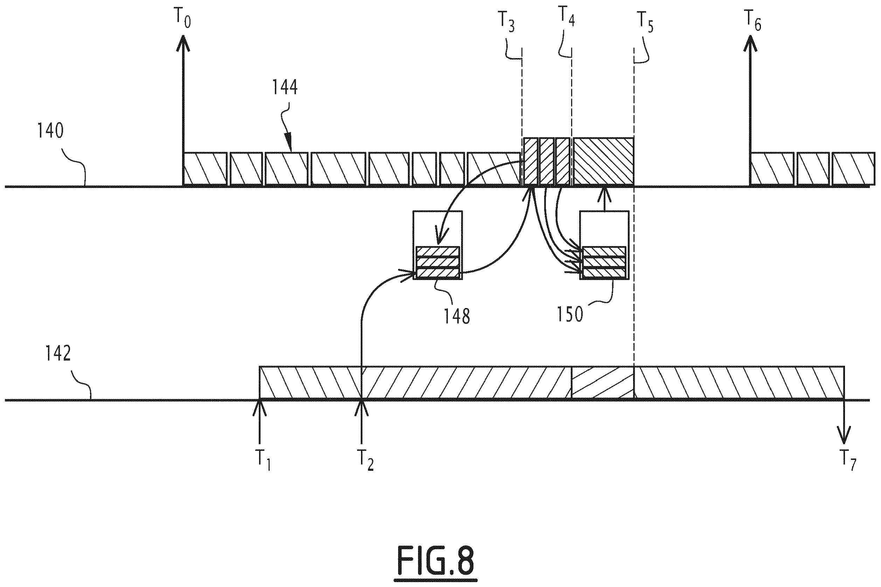

De préférence, les étapes 124 à 130 sont mises en oeuvre par un fil d'exécution (« thread » en anglais) différent, comme expliqué ci-après en référence à la figure 8.

Le procédé comporte une étape 124 de requête d'exécution de transition(s) entre un état courant et un état à atteindre pour obtenir le mode de fonctionnement interne permettant l'exécution de la fonction correspondant à la requête de l'utilisateur.

L'étape 124 met en oeuvre le mécanisme de pilotage des configurations internes, i.e. la logique de transitions et les schémas de câblage associés. En utilisant le système d'imbrication des méta-composants via les schémas de câblage, des demandes de transition(s) analogues au niveau de composants enfants du méta-composant fournisseur.

Les transitions entre états à effectuer sont mémorisées, dans une structure de mémorisation permettant un ordonnancement séquentiel, par exemple dans une file d'attente, et plus généralement une structure de mémorisation de type premier arrivé, premier sorti ou FIFO (pour « First In First Out), gérée par le module de séquencement pour réaliser un changement de mode de fonctionnement en temps réel sans effet de bord. La mémorisation (étape 126) est effectuée jusqu'à la fin du cycle temporel de durée RT, RT étant par exemple compris entre 1 et 10 ms.

Ensuite, le procédé comporte une étape 128 de dépilement des transitions d'état mémorisées, selon l'ordre de traitement « premier arrivé, premier sorti » ou FIFO, cette étape étant effectuée après l'exécution des calculs cycliques de l'ensemble des commandes élémentaires en cours liées à l'état courant du système.

Il est à noter que l'exécution des transitions d'états peuvent déclencher de nouvelles demandes de transitions en cascade, ces nouvelles demandes étant mises dans la file d'attente.

L'exécution des transitions d'état préalablement mémorisées est commandée, et des requêtes de changement ou de reconfiguration de schémas de câblage sont mémorisées, par exemple dans une structure de mémorisation de type dictionnaire.

Les recâblages des schémas de câblage sont effectués à l'étape 130, sensiblement en même temps.

Lorsque le système se trouve dans la configuration à atteindre, correspondant au mode de fonctionnement requis dans la requête de l'utilisateur, le méta-composant fournisseur exécute (étape 132) la fonction ou le service correspondant à la requête de l'utilisateur.

La figure 8 illustre schématiquement la logique de séquencement et de synchronisation d'un procédé tel que décrit ci-dessus en référence à la figure 7. En particulier, l'illustration schématique montre que le procédé met en oeuvre deux fils d'exécution (en anglais « thread ») 140 et 142. Le fil 140 gère l'exécution en temps réel « Real-time thread », le fil 142 l'exécution de la requête de commande du système fournie par l'utilisateur (« API thread ») qui est effectuée en mode asynchrone.

Le fil d'exécution temps réel 140 effectue des opérations de manière synchrone par rapport à des cycles temporels de durée RT, marqués à des instants d'horloge T₀, T₆ tels que la durée entre les deux instants temporels T₀ et T₆ est égale à RT.

Le fil d'exécution 140 exécute des commandes élémentaires 144 correspondant à un état courant du système à commander, i.e. à un mode de fonctionnement courant, jusqu'à un instant de fin d'exécution T₃.

Le fil d'exécution 142 est exécuté en parallèle. A un instant temporel T₁, qui est ultérieur à T₀, est reçue une requête de commande du système, en provenance de l'interface utilisateur, ce qui correspond à l'exécution de l'étape 122. Le fil d'exécution 142 est ensuite mis en attente, à l'instant T₂. L'instant T₂ correspond à une ou plusieurs requêtes de transition d'état sur un ou plusieurs composants du système.

Ces requêtes de transition d'état sont mises en file d'attente dans une structure de mémorisation de type premier arrivé, premier sorti 148. La file d'attente dans la structure de mémorisation 148 comprend les transitions à exécuter pour atteindre l'état du système à commander pour le mode de fonctionnement requis par l'utilisateur.

Le dépilement de la file d'attente, dans l'ordre FIFO, est effectué par le fil d'exécution 140, entre les instants temporels T₃ et T₄. Les schémas de câblage à exécuter conformément aux transitions mises en file d'attente 148 sont mémorisés, par exemple dans un dictionnaire de schémas de câblage à appliquer 150. L'exécution des reconfigurations des schémas de câblage (étape 130) est effectuée entre les instants temporels T₄ et T₅. A l'instant temporel T₅ l'exécution du fil d'exécution 142 est reprise, et ce jusqu'à un instant temporel T₇ quelconque, qui est ultérieur à l'instant temporel T₆ dans cet exemple de mise en oeuvre.

Le procédé décrit ci-dessus en référence aux figures 7 et 8 assure que le pilotage des configurations internes, i.e. des transitions entre états et de reconfiguration des schémas de câblage internes, est effectué de manière cohérente et synchronisée, alors que les commandes utilisateur sont reçues et traitées en mode asynchrone.

Ainsi, lorsque le système à commander est déjà en fonctionnement selon un mode de fonctionnement courant, le basculement dans un autre mode de fonctionnement commandé par l'utilisateur est effectué en tenant compte des enchaînements des transitions indiquées par la logique de transition de chaque méta-composant, et ce de manière imbriquée.

## Revendications

1. Système de commande de modes de fonctionnement d'un système à commander (4), chaque mode de fonctionnement étant mis en oeuvre par une exécution d'un ou plusieurs composants logiciels, le système de commande (20) étant **caractérisé en ce qu'**il comporte :
- des composants logiciels dits composants élémentaires (7k,30), chaque composant élémentaire ayant au moins une entrée (38, 40) adaptée à recevoir des données d'entrée et/ou au moins une sortie (42-50) adaptée à émettre des données de sortie,
- au moins un méta-composant logiciel (7k, 22, 22A,22B,22C) comportant :
un ou plusieurs schémas de câblage internes (28, 28₁-28_{N}), chaque schéma de câblage interne définissant des interconnexions entre entrées et sorties de composants élémentaires et/ou de méta-composants,
une logique de transition (26) entre états définissant un état courant dudit système (4) et un enchainement entre états, au moins certains des états correspondant à une mise en oeuvre d'un schéma de câblage interne (28, 28₁-28_{N}), et un mécanisme (11k) de pilotage des configurations internes,
une interface de programmation (9k, 24) fournissant des services/fonctions mettant en oeuvre au moins un schéma de câblage interne (28, 28₁-28_{N}),
- une interface de programmation principale (5), fournissant des services/fonctions accessibles via une interface utilisateur pour commander ledit système (4) selon une pluralité de modes de fonctionnement, ladite interface de programmation principale étant connectée aux interfaces de programmation (9k) de chaque composant logiciel (7k), ladite interface de programmation principale étant configurée pour exécuter des services/fonctions via le mécanisme (11k) de pilotage des configurations internes de chaque composant logiciel.

2. Système de commande selon la revendication 1, comportant en outre un module de séquencement (15) de transitions permettant de réaliser un basculement d'un mode de fonctionnement à un autre en temps réel.

3. Système de commande selon la revendication 2, dans lequel le module de séquencement (15) met en oeuvre, suite à une commande de basculement d'un mode de fonctionnement courant à un nouveau mode de fonctionnement, une mémorisation des transitions à effectuer séquentiellement pour passer audit mode de fonctionnement nouveau, et une commande d'exécution de reconfigurations des schémas de câblage internes des composants logiciels en cascade, avant l'écoulement d'une durée de cycle temporel prédéterminée.

4. Système de commande selon la revendication 3, dans lequel la mémorisation des transitions à effectuer est une mémorisation dans une structure de mémorisation de type premier arrivé, premier sorti (148), et dans lequel la commande d'exécution des reconfigurations met en oeuvre un dépilement des transitions mémorisées dans ladite structure de mémorisation.

5. Système de commande selon l'une des revendications 1 à 4, dans lequel ladite logique de transition (26) entre états est mise en oeuvre sous forme d'automate à états finis.

6. Système de commande selon la revendication 5, dans lequel ladite logique de transition (26) entre états est mise en oeuvre sous forme d'automate ayant un nombre fini d'états hiérarchisés.

7. Système de commande selon l'une des revendications 1 à 6, adapté pour commander les modes de fonctionnement d'un système robotique (4).

8. Procédé de commande de modes de fonctionnement d'un système à commander, mis en oeuvre par un système de commande (20) de modes de fonctionnement selon les revendications 1 à 7, le procédé étant **caractérisé en ce qu'**il comporte des étapes de:
- réception (120) d'une requête de commande dudit système à commander (4), selon un mode de fonctionnement,
- appel (122) d'une fonction ou d'un service mis oeuvre par un méta-composant fournisseur, pour effectuer ladite requête de commande ;
- requête d'exécution (124) de transition(s) entre un état courant et un état à atteindre pour exécuter ladite fonction ou ledit service, par mise en oeuvre de la logique de transitions dudit méta-composant fournisseur et des composants imbriqués dans le méta-composant fournisseur,
- commande de reconfiguration (130) de schémas de câblage internes en fonction desdites transitions.

9. Procédé de commande selon la revendication 8, comportant en outre une mémorisation (126) des transitions à effectuer séquentiellement pour passer d'un mode de fonctionnement courant au mode de fonctionnement nouveau requis par ladite requête de commande du système, et une commande d'exécution des reconfigurations des composants logiciels en cascade, avant l'écoulement d'une durée de cycle temporel prédéterminée.

10. Procédé de commande selon la revendication 9, dans lequel la mémorisation des transitions à effectuer est une mémorisation dans une structure de mémorisation de type premier arrivé, premier sorti (148), et dans lequel la commande d'exécution des reconfigurations met en oeuvre un dépilement des transitions mémorisées dans ladite structure de mémorisation (148).

11. Programme d'ordinateur comportant des instructions logicielles qui, lorsqu'elles sont exécutées par un dispositif électronique programmable, mettent en oeuvre un procédé de commande de modes de fonctionnement d'un système à commander conforme aux revendications 8 à 10.

## Patentansprüche

1. Steuersystem von Betriebsmodi eines zu steuernden Systems (4), wobei jeder Betriebsmodus durch eine Ausführung einer oder mehrerer Softwarekomponenten implementiert wird, wobei das Steuersystem (20) **dadurch gekennzeichnet ist, dass** es Folgendes umfasst:
- Softwarekomponenten, die als Elementarkomponenten (7k, 30) bezeichnet werden, wobei jede Elementarkomponente mindestens einen Eingang (38, 40), der zum Empfangen von Eingangsdaten angepasst ist, und/oder mindestens einen Ausgang (42-50), der zum Ausgeben von Ausgangsdaten angepasst ist, aufweist,
- mindestens eine Software-Metakomponente (7k, 22, 22A, 22B, 22C), umfassend:
einen oder mehrere interne Verdrahtungspläne (28, 28₁-28_{N}), wobei jeder interne Verdrahtungsplan Verbindungen zwischen Ein- und Ausgängen von Elementarkomponenten und/oder Meta-Komponenten definiert,
eine Übergangslogik (26) zwischen Zuständen, die einen aktuellen Zustand des Systems (4) und eine Verkettung zwischen Zuständen definiert, wobei mindestens einige der Zustände einer Implementierung eines internen Verdrahtungsschemas (28, 28₁-28_{N}) entsprechen, und einen Mechanismus (11k) zur Steuerung der internen Konfigurationen,
eine Programmierschnittstelle (9k, 24), die Dienste/Funktionen bereitstellt, die mindestens ein internes Verdrahtungsschema (28, 28₁-28_{N}) implementieren,
- eine Hauptprogrammierschnittstelle (5), die Dienste/Funktionen bereitstellt, auf die über eine Benutzerschnittstelle zugegriffen werden kann, um das System (4) in einer Vielzahl von Betriebsmodi zu steuern, wobei die Hauptprogrammierschnittstelle mit den Programmierschnittstellen (9k) jeder Softwarekomponente (7k) verbunden ist, wobei die Hauptprogrammierschnittstelle konfiguriert ist, um Dienste/Funktionen über den Mechanismus (11k) zur Steuerung der internen Konfigurationen jeder Softwarekomponente auszuführen.

2. Steuersystem nach Anspruch 1, ferner umfassend Sequenzierungsmodul (15) von Übergängen, das es ermöglicht, ein Umschalten von einem Betriebsmodus auf einen anderen in Echtzeit durchzuführen.

3. Steuersystem nach Anspruch 2, wobei das Sequenzierungsmodul (15) nach einem Befehl zum Umschalten von einem aktuellen Betriebsmodus auf einen neuen Betriebsmodus eine Speicherung der sequentiell auszuführenden Übergänge zum Umschalten auf den neuen Betriebsmodus und eine Steuerung zur Ausführung von Rekonfigurationen der internen Verdrahtungspläne der kaskadierten Softwarekomponenten vor Ablauf einer vorbestimmten Zeitzyklusdauer implementiert.

4. Steuersystem nach Anspruch 3, wobei die Speicherung der auszuführenden Übergänge eine Speicherung in einer Speicherstruktur vom Typ first-in-first-out (148) ist, und wobei der Befehl zur Ausführung von Rekonfigurationen eine Entstapelung der Übergänge implementiert, die in der Speicherstruktur gespeichert sind.

5. Steuersystem nach einem der Ansprüche 1 bis 4, wobei die Übergangslogik (26) zwischen Zuständen in Form von endlicher Zustandsautomat implementiert ist.

6. Steuersystem nach Anspruch 5, wobei die Übergangslogik (26) zwischen Zuständen in Form eines Automaten implementiert ist, der eine endliche Anzahl von hierarchisierten Zuständen aufweist.

7. Steuersystem nach einem der Ansprüche 1 bis 6, das angepasst ist, um die Betriebsmodi eines Robotersystems (4) zu steuern.

8. Steuerverfahren von Betriebsmodi eines zu steuernden Systems, das von einem Steuersystem (20) von Betriebsmodi nach den Ansprüchen 1 bis 7 implementiert ist, wobei das Verfahren **dadurch gekennzeichnet ist, dass** es die folgenden Schritte umfasst:
- Empfangen (120) einer Steueranforderung des zu steuernden Systems (4) gemäß einem Betriebsmodus,
- Aufrufen (122) einer Funktion oder eines Dienstes, die/der von einer Anbieter-Metakomponente implementiert ist, um die Steueranforderung auszuführen;
- Ausführungsanforderung (124) von Übergängen zwischen einem aktuellen Zustand und einem zu erreichenden Zustand, um die Funktion oder den Dienst auszuführen, durch Implementieren der Übergangslogik der Anbieter-Metakomponente und der in der Anbieter-Metakomponente verschachtelten Komponenten,
- Steuern der Rekonfiguration (130) von internen Verdrahtungsplänen abhängig von den Übergängen.

9. Steuerverfahren nach Anspruch 8, ferner umfassend ein Speichern (126) der Übergänge, die sequentiell auszuführen sind, um von einem aktuellen Betriebsmodus in den neuen Betriebsmodus umzuschalten, der von der Steueranforderung des Systems gefordert wird, und eine Steuerung zur Ausführung der Rekonfigurationen der Softwarekomponenten in Kaskade vor Ablauf einer vorbestimmten Zeitzyklusdauer.

10. Steuerverfahren nach Anspruch 9, wobei die Speicherung der auszuführenden Übergänge eine Speicherung in einer Speicherstruktur vom Typ first-in-first-out (148) ist, und wobei der Befehl zur Ausführung von Rekonfigurationen eine Entstapelung der Übergänge implementiert, die in der Speicherstruktur (148) gespeichert sind.

11. Computerprogramm, umfassend Softwarebefehle, die, wenn sie von einer programmierbaren elektronischen Vorrichtung ausgeführt werden, ein Verfahren zur Steuerung von Betriebsmodi eines zu steuernden Systems gemäß den Ansprüchen 8 bis 10 implementieren.

## Claims

1. A system for controlling operating modes of a system to be controlled (4), each operating mode being implemented by an execution of one or more software components, the control system (20) being **characterized in that** it comprises:
- software components called elementary components (7k, 30), each elementary component having at least one input (38, 40) able to receive input data and/or at least one output (42-50) able to emit output data,
- at least one software meta-component (7k, 22, 22A, 22B, 22C) including :
one or more internal wiring diagrams (28, 28₁-28_{N}), each internal wiring diagram defining interconnections between inputs and outputs of elementary components and/or meta-components,
a transition logic (26) between states defining a current state of said system (4) and a sequence between states, at least some of the states corresponding to an implementation of an internal wiring diagram (28, 28₁-28_{N}), and a mechanism (11k) for controlling the internal configurations,
a programming interface (9k, 24) providing services/functions implementing at least one internal wiring diagram (28, 28₁-28_{N})
- a main programming interface (5), providing services/functions accessible via a user interface for controlling said system (4) according to a plurality of operating modes, said main programming interface being connected to the programming interfaces (9k) of each software component (7k), said main programming interface being configured to execute services/functions via the mechanism (11k) for controlling the internal configurations of each software component.

2. The control system according to claim 1, further including a transition sequencing module (15) allowing to carry out a switchover from one operating mode to another in real time.

3. The control system according to claim 2, wherein the sequencing module (15) implements, following a command to switch from a current operating mode to a new operating mode, a storage of the transitions to be carried out sequentially to switch to said new operating mode, and a command to carry out reconfigurations of the internal wiring diagrams of the cascaded software components, before the elapse of a predetermined time cycle duration.

4. The control system according to claim 3, wherein the storage of the transitions to be performed is a storage in a first-in, first-out storage structure (148), and wherein the command to carry out the reconfigurations implements unstacking the transitions stored in said storage structure.

5. The control system according to any of claims 1 to 4, wherein said transition logic (26) between states is implemented as a finite state machine.

6. The control system according to claim 5, wherein said transition logic (26) between states is implemented as an automaton having a finite number of hierarchical states.

7. The control system according to one of claims 1 to 6, able to control the operating modes of a robotic system (4).

8. A method for controlling operating modes of a system to be controlled, implemented by an operating mode control system (20) according to claims 1 to 7, the method being **characterized in that** it includes steps of:
- receiving (120) a control request from said system to be controlled (4), according to an operating mode,
- calling (122) a function or a service implemented by a provider meta-component, in order to carry out said control request
- execution request (124) of transition(s) between a current state and a state to be reached to execute said function or service, by implementing the transition logic of said provider meta-component and of the components nested in the provider meta-component
- reconfiguration control (130) of internal wiring diagrams based on said transitions.

9. The control method according to claim 8, further including a storage (126) of transitions to be carried out sequentially to change from a current mode of operation to the new mode of operation required by said system control request and controlling the execution of the reconfigurations of the software components in cascade, prior to the elapse of a predetermined time cycle duration.

10. The control method according to claim 9, wherein the storage of the transitions to be carried out is a storage in a first-in, first-out storage structure (148), and wherein the control of the execution of the reconfigurations implements an unstacking of the transitions stored in said storage structure (148).

11. A computer program including software instructions which, when executed by a programmable electronic device, implement a method of controlling operating modes of a system to be controlled according to claims 8-10.
